Europäisches Patentamt

European Patent Office

Office européen des brevets

(11) Veröffentlichungsnummer: **0 104 622**
**B1**

(12) **EUROPÄISCHE PATENTSCHRIFT**

(45) Veröffentlichungstag der Patentschrift: **02.05.90**

(21) Anmeldenummer: **83109487.5**

(22) Anmeldetag: **23.09.83**

(51) Int. Cl.⁵: **A 01 C 3/06,** A 01 C 17/00

(54) **Vorrichtung zum Ausstreuen von Stallmist, Handelsdünger u. dergl.**

(30) Priorität: **27.09.82 DE 3235755**

(43) Veröffentlichungstag der Anmeldung:
**04.04.84 Patentblatt 84/14**

(45) Bekanntmachung des Hinweises auf die
Patenterteilung:
**02.05.90 Patentblatt 90/18**

(84) Benannte Vertragsstaaten:
**AT CH FR GB LI NL SE**

(56) Entgegenhaltungen:
**EP-A-0 084 872**
**FR-A-2 284 268**
**FR-A-2 368 212**
**US-A-2 692 506**
**US-A-3 232 627**

(73) Patentinhaber: **KUHN S.A.**
**4, Impasse des Fabriques**
**F-67706 Saverne Cedex (FR)**

(72) Erfinder: **Weichel, Ernst**
**Bahnhofstrasse 1**
**D-7326 Heiningen (DE)**

(74) Vertreter: **Seemann, Norbert W.**
**Brehmstrasse 37**
**D-7320 Göppingen (DE)**

Courier Press, Leamington Spa, England.

**Beschreibung**

Die vorliegende Erfindung bezieht sich auf eine Vorrichtung zum Ausstreuen von Stallmist o.ä. mit einer an einer Ladefläche angebauten Streuvorrichtung, die zwei um etwa vertikal stehende Achsen umlaufende, nach vorne teilweise von Prallwänden umgebene Streuscheiben aufweist, die am hinteren Ende eines Kratzbodens und unterhalb wenigstens einer unter einer Abdeckhaube rotierenden horizontalen Dosierwalze angeordnet sind. Die Dosierwalze zerkleinert das vom Kratzboden zugeführte Streugut und wirft es auf die Streuscheiben.

Die Streuscheiben schleudern das auf sie fallende Gut nach hinten oder zur Seite. Ein Drehschieber ist um die Drehachse von mindestens einer Streuscheibe verschwenkbar und feststellbar angeordnet, wobei der senkrechte Rand des Drehschiebers konzentrisch um die Streuscheibe verschwenkbar ist und in wenigstens einer seiner möglichen Stellungen das hintere Ende der Prallwand überragt und dadurch die Richtung des von den Streuscheiben ausgeworfenen Gutes verändert.

Eine derartige Streuvorrichtung ist der DE-A-24 44 087 bekannt. Bei dieser Vorrichtung kann sich das auszustreuende Gut an dem Drehschieber festsetzen und zu Störungen führen.

Die der vorliegenden Erfindung zugrunde liegende Aufgabe besteht deshalb auch darin, die Nachteile der bekannten Streuvorrichtung zu beseitigen und diese zugleich so zu verbessern, daß sie noch preisgünstiger herstellbar, einfacher an Streuwagen unterschiedlicher Fabrikate — auch nachträglich — anbaubar, besser auf die Eigenschaften unterschiedlichen Streugutes einstellbar und außerdem in der Lage ist, auch schwierigstes Streugut gleichmäßig und ohne Klumpenbildung noch breiter und feiner sowohl nach hinten und zur Seite, als auch ausschließlich nach beiden Seiten neben die Fahrspur, oder auch ausschließlich nach einer Seite und nach hinten, sowie genau auf eine Grundstückgrenze auszustreuen. Sie soll wahlweise auch ausschließlich neben die Fahrspur, oder z.B. auf einen neben einem Feldweg anzulegenden Komposthaufen ausstreuen und sogar auch z.B. eine hinter dem Streugerät angebaute oder aufgestellte Verarbeitungsmaschine beschicken können, ohne daß es erforderlich ist, für diese sehr unterschiedlichen Arbeitsweisen z.B. wesentliche Teile des Streugerätes abzunehmen oder sie z.B. durch ein Entladeband oder eine Förderschnecke zu ersetzen.

Die Erfindung löst diese Aufgabe dadurch, daß die die Vorderseite der Streuscheiben in Fahrtrichtung gesehen umgebenden und zur Drehachse der Streuscheiben konzentrischen Prallwände z-förmig profiliert und ausschließlich an ihrem oberen Rand mit einer zwischen den Streuschieben befindlichen Plattform un einem Querträger derart verbunden sind, daß die Verschwenkung des senkrechten Rands des um die Drehachse jeder Streuscheibe verschwenkbaren und feststellbaren Drehschiebers in einem vertikalen Spalt zwischen der Außenseite der Prallwand und der Rückseite des Querträgers erfolgt.

Vorzugsweise sind die inneren Enden der Prallwände etwa im Bereich einer gedachten Verbindungslinie der Drehachsen der Streuscheiben, die äußeren Enden dagegen in einem erheblichen Abstand vor derselben angeordnet. Die zur Lösung der mit der Erfindung gestellten Aufgabe erforderlichen Verfahrensmerkmale und baulichen bzw. maschinellen Mittel sind in den Patentansprüchen niedergelegt, in den Zeichnungen dargestellt und anhand diesen im Detail, soweit erforderlich, näher beschrieben.

Die Erfindung wird in den Zeichnungen anhand mehrerer Ausführungsbeispiele in der Weise erläutert, daß Merkmale, die in einer Figur gezeichnet oder beschrieben sind, in sinngemäß gleicher Weise auch auf andere Ausfürungsbeispiele übertragbar sein sollen.

Es zeigen:

Fig. 1 eine perspektivische Ansicht des Streugerätes schräg von hinten links nach rechts vorne gesehen,

Fig. 2 eine teilweise geschnittene Draufsicht auf ein Streugerät nach der vorliegenden Erfindung in abgebautem Zustand,

Fig. 2a eine Detailansicht einer Stufenplatte,

Fig. 3 eine teilweise geschnittene Seitenansicht auf das an einem Kratztboden mit 2 horizontalen Dosierwalzen angebaute Streugerät,

Fig. 4 eine schematische Draufsicht auf ein Streugerät beim Breitstreuen,

Fig. 5 eine entsprechende Ansicht auf ein Streugerät beim Grenzstreuen,

Fig. 6 eine entsprechende Drafsicht beim Streuen neben die Fahrspur,

Fig. 7 eine entsprechende Draufsicht beim Abstreuen auf einen neben der Fahrspur angelegten Komposthaufen,

Fig. 8 eine teilweise geschnittene Ansicht von hinten und

Fig. 9 eine schematische Draufsicht auf ein weiteres Ausführungsbeispiel,

Fig. 10 eine schematische Draufsicht auf ein Streugerät beim Beschicken eines Folgegerätes,

Fig. 11 eine schematische Draufsicht auf ein Antriebsschema und

Fig. 12 eine weitere schematische Draufsicht auf ein Antriebsschema.

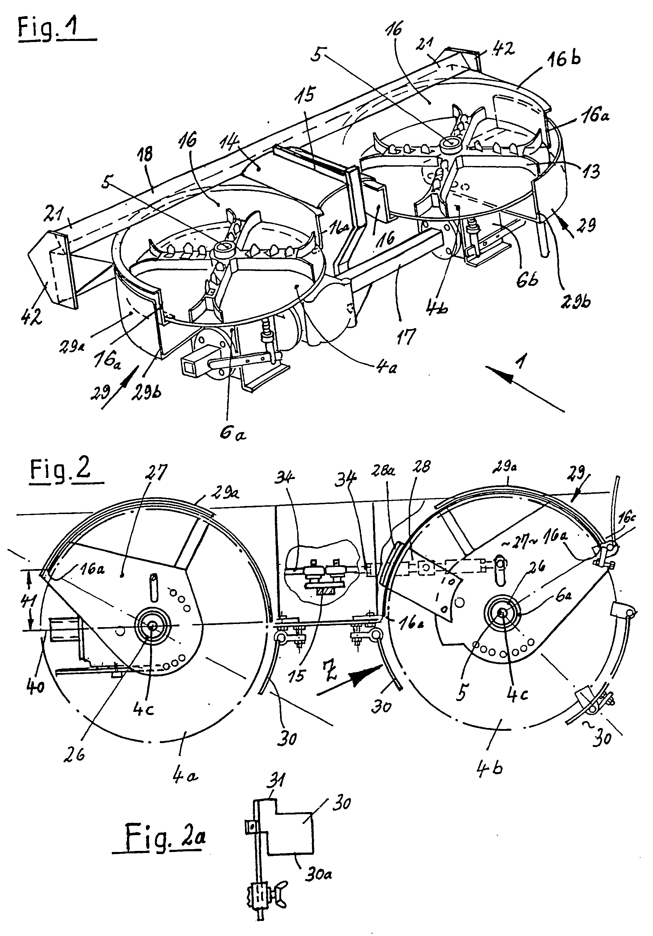

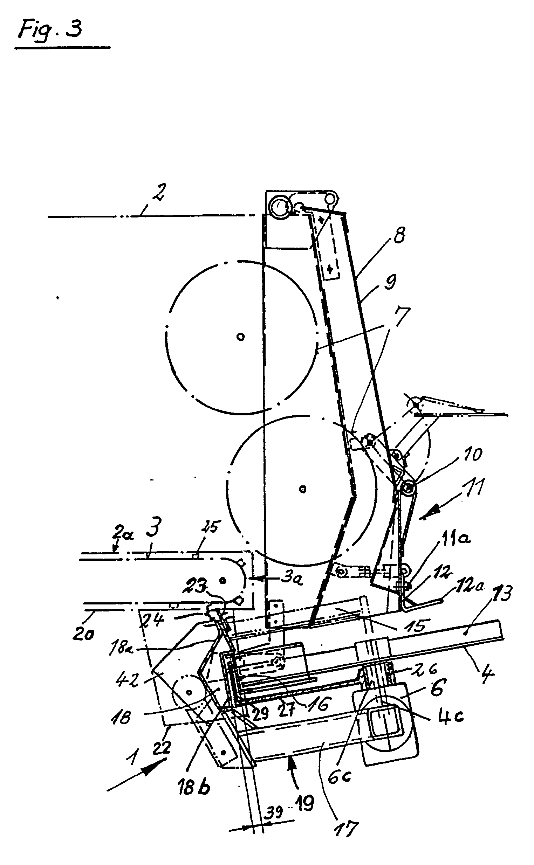

Wie die Figuren 1, 2 und 3 zeigen, weist das Breitstreugerät 1 zwei Streuscheiben 4a und 4b auf, von denen jede direkt auf der etwa senkrechten Abtriebswelle 5 eines Winkelgetriebes 6a, 6b befestigt ist. Sie sind in einem gewissen Abstand voneinander unterhalb des hinteren Endes 3a des Kratzbodens 3 des Streuers 2 (mit horizontalen Dosierwalzen 7) angeordnet.

Die horizontalen Dosierwalzen 7 sind nach hinten durch eine abnehmbare Haube 8 abgedeckt, an deren Rückwand 9 eine um ein parallel zum Kratzoden 3 verlaufendes Scharnier 10 schwenkbare und auf verschiedene Neigungen einstellbare Klappe 11 efestigt ist.

Am unteren Rand 11a dieser Klappe 11 ist ein begrenzt höhenverstellbarer und mit einem als Deckblech horizontal abgewinkelten Rand 12a versehener Schieber 12 angeordnet. Er verhindert das Wegschleudern spezifisch leichter Teile des Streugutes durch Luftwirbel, bevor sie von den Streurippen 13 ausreichend beschleunigt wurden. Zwischen den Streuscheiben 4 befindet sich eine etwas gewölbte Plattform 14, auf der ein hin- und hergehender Räumarm 15 das von den Dosierwalzen 7 zerkleinerte und nach unten ausgeworfene Streugut abwechselnd auf die linke oder rechte Streuscheibe 4a, 4b schiebt. Das Getriebe 6a weist eine um eine parallel zur Fahrtrichtung verlaufende Achse rotierende Abtriebswelle 46 mit einem Kurbelzapfen 47 auf, an dem eine den Räumarm 15 mit der Kurbel 47 verbindende Zugstange 34 abgelenkt ist.

Diese Plattform 14, die kreisbogenförmigen Prallwände 16 vor den Streuscheiben 4 und zwei Tragarme 17 der (miteinander verbundenen) Getriebe 6a, 6b sind mit einem schmalen Querträger 18 zu einem Rahmen 19 verschweißt, dessen seitliche Enden 21 mit Tragplatten 42 versehen sind, die an unterhalb der Längsträger 20 des Fahrzeugrahmens 2a anschraubbaren (oder anschweißbaren) Konsolen 22 leicht lösbar angebracht sind. Eine Gummilippe 23 an seiner Oberseite 18a dichtet den Zwischenraum 24 zwischen dem Querträger 18 und der Unterseite des Kratzbodens 3 ab. Da der Querträger 18 als schmales Hohlprofil mit stark abgeschrägter Oberseite 18a ausgebildet ist, kann sich etwa von den Kratzleisten 25 hinter die Gummilippe 23 mitgenommenes Streugut nirgends ansammeln, es fällt daher fortlaufend zu Boden.

Die inneren der Enden 16a der Prallwände 16 sind etwa im Bereich einer gedachten Verbindungslinie 40 der Drehachsen 4c der Streurscheiben 4a, 4b, die äußeren der Enden 16a dagegen in erheblichen Abstand 41 vor derselben angeordnet.

Da die Prallwände 16 in ihrem Querschnitt z-förmig profiliert und nur an ihrem oberen Ende 16b mit den seitlichen Rändern der Plattform 14 und der rückwärtigen Wand des Querträgers 18 verschweißt sind, ergibt sich zwischen der Außenseite 16c der Prallwände 16 und der Rückseite 18b des Querträgers 18 ein schmaler Vertikalspalt 39, in dem konzentrisch um die Abtriebswellen des Getriebes der kreisbogenförmige vertikale Rand 29a je eines Drehschiebers 29 schwenkund in beliebigen Stellungen feststellbar ist, dessen horizontale Grundplatte 27 über eine Lagerbuchse 26 um den oberen Hals 6c des Winkelgetriebes 6 konzentrisch zur Achse 4c des Streuscheibe 4 und zu den Prallwänden 16 schwenkbar und feststellbar angeordnet ist.

Durch Anschrauben einer zweiten Grundplatte 28 mit senkrechten Rand 28a (in verschiedenen Winkelstellungen an der ersten Grundplatte 27), kann der Drehschieber 29 die starre Prallwand 16 auch innen und außen um ein einstellbares Maß überragen. Dadurch kann die Streurichtung an beiden Enden der Prallwand 16 verändert und etwa am stirnseitigen Rand 16a der Prallwand 16 sich festsetzendes Gut immer wieder abgestreift werden. Das stirnseitige Ende des senkrechten Randes 29a des Drehschiebers 29 kann aber auch ganz (oder zum größten Teil bzw. zeitweise) hinter der Prallwand 16 verschwinden, also wirkungslos gemacht werden. Der Rand 29a kann also den hinteren Rand 16a der Prallwände 16 um unterschiedliche (einstellbare) Bereiche überragen.

Um eine möglichst gleichmäßige Verteilung des Streugutes (auch zwischen dem Bereich innerhalb der Fahrspur und den an diese links und rechts anschließenden Bereichen) zu erzielen, sind entweder am hinteren Ende 16a der starren Prallwände 16 (oder des Drehschiebers 29) höhenverstellbare und begrenzt schwenkbare Stufenplatten 30 angebracht.

Sie werden entweder tangential oder in einem spitzen Winkel zum Umfang jeder Streuscheibe 4 eingestellt und lenken das (von den Streuscheiben 4 größtenteils tangential ausgeworfene) Streugut etwas ab, so daß es etwas aufgefächert wird. Dadurch wird, z.B. bei feuchtem Stallmist, die Entstehung von Klumpen vermieden und ein gleichmäßiges Streubild erreicht.

Die Drehrichtung des (in Fahrtrichtung von hinten gesehen) rechten Getriebes 6b ist mittels einer nicht näher dargestellten Klauenkupplung umschaltbar. Beide Getriebe 6a, 6b sind durch eine Welle 63 verbunden. Das Getriebe 6a besitzt eine Eingangswelle 52, die auf die Abtriebswelle 53 eines Verteilergetriebes 54 aufsteckbar ist. Das Verteilergetriebe 54 ist in einem seitlichen Abstand von der Längsmittellinie des Fahrzeuges 2 unterhalb des Kratzbodens 3 angeordnet.

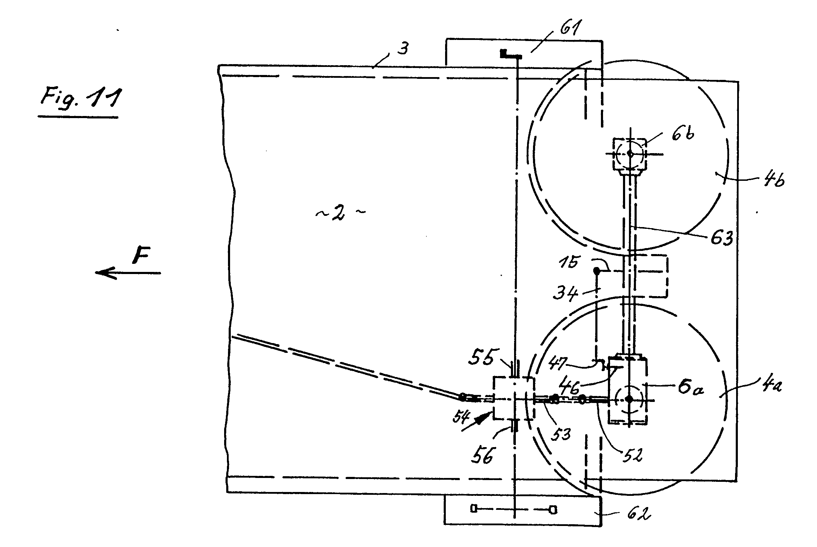

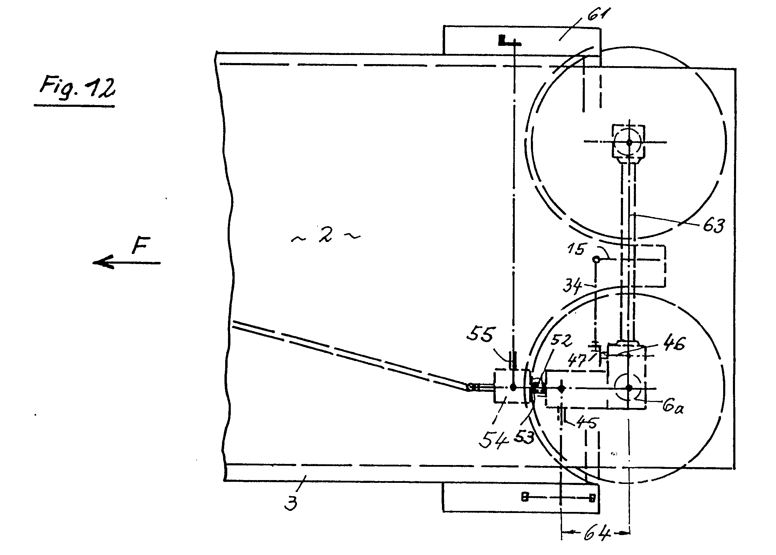

Nach Fig. 11 besitzt das Verteilergetriebe 54 zwei seitliche Abtriebswellen 55, 56 für die Schrittschaltung 61 des Kratzbodens und den Antrieb 62 der Dosierwalzen 7. Nach Fig. 12 ist die Eingangswelle 52 des Getriebes 6a mit der Abtriebswelle 53 eines Winkelgetriebes 54 verbunden, das nur eine seitliche Abtriebswelle 55 aufweist, die die Schrittschaltung 61 des Kratzbodens antreibt.

Die horizontalen Dosierwalzen 7 sind durch eine seitliche Abtriebswelle 45 des die Streuscheiben 4a tragenden Getriebes 6a antreibbar. Diese Abtriebswelle 45 liegt parallel zu der Verbindungswelle 63 beider Streuscheibengetriebe 6, aber in einem Abstand 64 nach vorne versetzt.

II. Arbeitweise

Dieses neue Zweischeiben-Streuwerk ermöglicht erstmals folgende Betriebsarten:

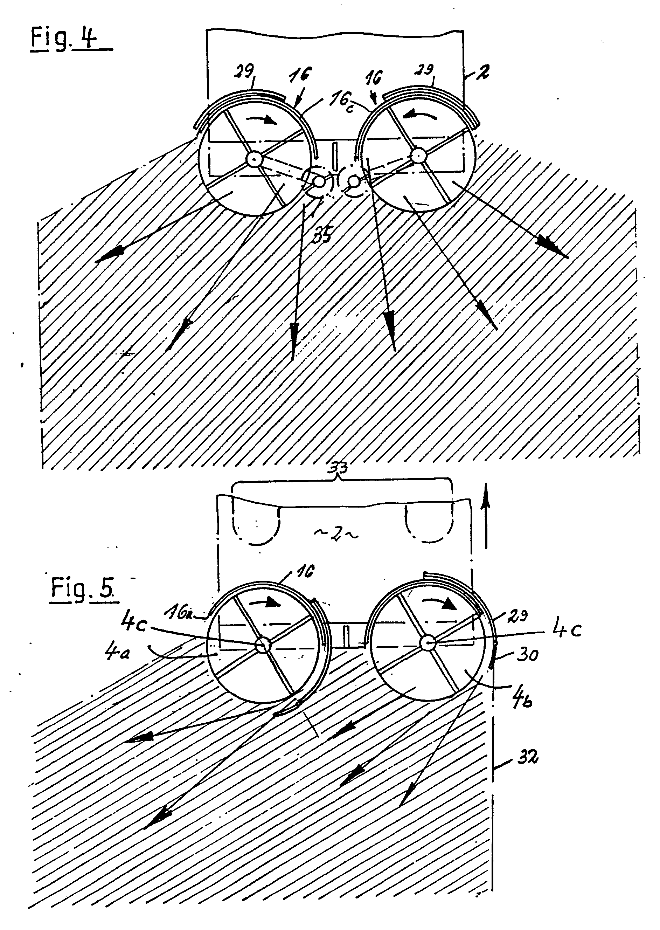

1. Breitstreuen (symmetrisch nach beiden Seiten) bis zu einer Streubreite von 12 bis 15 m. (Fig. 4)

Hierbei drehen beide Streuscheiben 4 gegeneinander. Die linke Streuscheibe 4a dreht (in der Draufsicht betrachtet) im Uhrzeigersinn.

Falls z.B. in der Fahrspur 33 des Streuwagens 2 zu viel Streugut abgelegt wird, müssen die Stufenplatten 30 etwas höher gestellt warden, damit mehr Streugut tangential und schräg nach hinten ausgeworfen wird.

Sollte in der Fahrspur 33 zu wenig Streugut abgelegt werden, sind die Stufenplatten 30 etwas tiefer zu stellen, damit mehr Streugut über ihren oberen Rand 31 nach innen geworfen wird.

## 2. Grenzstreuen (Fig. 5)

Wenn der Streuwagen 2 mit seinem rechten Rad auf der Grenze 32 eines Grundstückes fährt, ist es unbedingt notwendig, daß sämtliches Streugut ausschließlich in die Fahrspur und nach links gestreut, aber kein Streugut über die Grundstückgrenze 32 nach rechts ausgeworfen wird. Außerdem muß natürlich die Verteilung des Streugutes bis zur Grundstücksgrenze so gleichmäßig wie möglich sein. Für diese Arbeit wird die Drehrichtung des rechten Getriebes 6b umgeschaltet, so daß beide Streuscheiben 4 — in der Draufsicht betrachtet — sich im Uhrzeigersinn drehen.

Der Drehschieber 29 der rechten Streuscheibe 4b wird um etwa 15-20° im Uhrzeigersinn nach hinten und die an seiner hinteren Stirnseite befindliche Stufenplatte 30 so eingestellt, daß ein kleinerer Teil des Streugutes genau nach hinten, ein größerer Teil aber nach links (in die Fahrspur 33 und den an diese links anschließenden Bereich) ausgeworfen wird. Die Anteile, die genau in die Fahrspur 33 oder nach links ausgeworfen werden, können durch Verstellung der Höhenlage bzw. der Richtung der Stufenplatten 30 verändert werden.

Wenn die Stufenplatte 30 höher gestellt wird, gelangt weniger Gut an die Grundstücksgrenze 32 bzw. die Fahrspur 33, weil ihr unteres Ende 30a mehr Streugut in Richtung nach links ablenken wird.

Der Drehschieber 29 der linken Streuscheibe 4a wird nach hinten, und die an seinem äußeren Ende angebrachte Stufenplatte 30 wird so hoch wie möglich eingestellt, damit das Streugut schräg nach hinten zur Seite ausgeworfen wird. Die Streubereiche der rechten und linken Streuscheibe 4a, 4b sollen sich zum Teil überdecken, zum Teil aber auch addieren. Deshalb sind die Stufenplatten 30 sowohl innen am Rahmen 19 des Streugerätes 1 (bzw. an der starren Prallwand 16), als auch an den stirnseitigen Enden 29b des Drehschiebers 29 anbringbar.

Mit dieser Grenzstreueinrichtung wird das Grundstück an seinem äußeren Rand (entgegen dem Uhrzeigersinn) vollständig umfahren, d.h. von der Grenze her nach innen gestreut. Sobald dies geschehen ist, wird das Streugerät 1 auf Breitstreuen gemäß Abschnitt 1 umgestellt und jeweils parallel in einem Abstand von ca. 12-15 m gefahren.

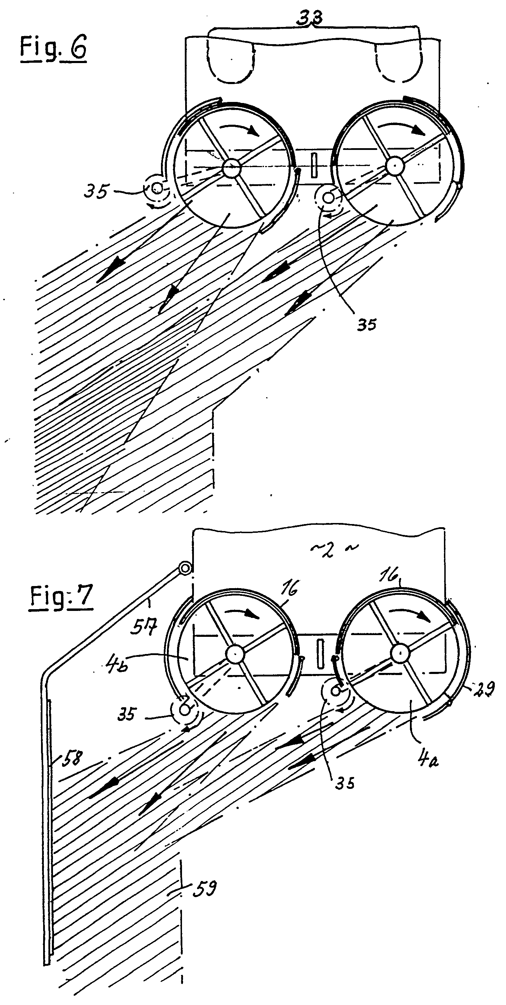

## 3. Seitenstreuen am Hang (oder neben die Fahrspur) (Fig. 6)

Das Seitenstreuen (z.B. am Hang oder von einem Feldweg) erfolgt in der Regel mit einer ähnlichen Einstellung des Streugerätes 1 wie beim Grenzstreuen, je nachdem, ob die Fahrspur 33 mit bestreut oder ganz ausgespart, d.h. ausschließlich in den Bereich links neben der Fahrspur 33 (breitflächig hangabwärts oder z.B. auf eine Kompostmiete) ausgestreut werden soll.

4.1 Fig. 1 und 2 zeigen eine Zusatzeinrichtung. Um auch bei sehr schwierigem Material (z.B. nassem, strohigem Mist), ein besonders gleichmäßiges Streubild (ohne Klumpenbildung) zu erzielen, kann jeder Drehschieber 29 über die verstellbare Zugstange 34 und in verschiedenen Stellungen mit dem Räumarm 15 verbunden und dadurch jeweils um einstellbare Bereiche hin- und herbewegt werden. Sein hinterer stirnseitiger Rand 29a verändert die Streurichtung in einen gewissen Bereich ständig. Da die inneren und äußeren Grundplatten 27, 28 des Drehschiebers 29 gegeneinander verschwenk- und feststellbar sind, können sie ggf. das Streugut innen und außen unterschiedlich ablenken.

Wenn sich z.B. der innere Rand 29a des Drehschiebers 29 überwiegend hinter der Prallwand 16 befindet, d.h. diese nur kurzzeitig überragt, wird das Streugut, das sich etwa an diesem Rand festgesetzt hat, periodisch abgestreift, im wesentlichen aber in der von diesem bestimmten Richtung ausgeworfen. Ähnliches gilt auch für den äußeren Rand 29b des Drehschiebers 29.

Wenn dagegen der Rand 29a des Drehschiebers die Prallwand 16 ständig überragt, (d.h. sich über eine verhältnismäßig große Strecke außerhalb der Prallwand 16 befindet) wird die Streurichtung ständig und stark aufgefächert. Etwa am hinteren Rand des Drehschiebers 29 hängen bleibendes Streugut wird dann bei jedem Hub abgestreift. Das ist z.B. bei Seitenstreuen von Bedeutung.

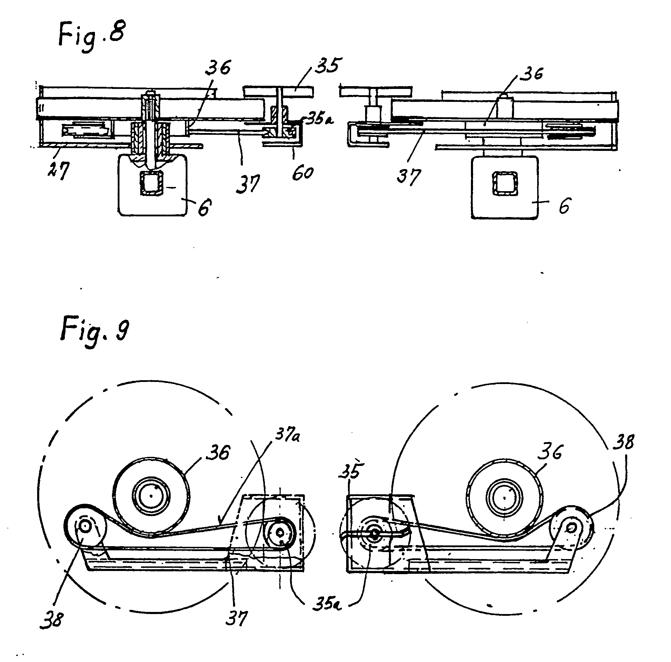

4.2 Zur weiteren Verbesserung des Streubildes, vor allem bei sehr schwierigem Streugut (z.B. nasser Hühnermist, Klärschlamm usw.) schlägt die Erfindung antreibbare Verteilersterne 35 auch nachträglich zu jeder Streuscheibe 4 vor. (Fig. 8 und 9)

Diese Verteilersterne 35 sind in einer Lagerkonsole 60 drehbar gelagert. Sie werden von einem an der Unterseite der Streuscheibe 4 angebrachten Reibring 36 und einem abgedeckten Keilriemen 37 angetrieben. Der Keilriemen 37 umschlingt eine auf der Welle des Verteilersternes angebrachte Keilriemenscheibe 35a un eine unterhalb der Streuscheibe 4 angeordneten Spannrolle 38. Mit seiner Außenseite 37a liegt er kraftschlüssig an dem Reibring 36 an. Die Verteilersterne 35 bewirken eine zusätzliche Zerkleinerung und eine bessere Verteilung des von den Streuscheiben 4 überwiegend entlang der Prallwand 16 ausgeworfenen Streugutes. Sie verbessern daher das Streubild und verhindern jede Klumpenbildung.

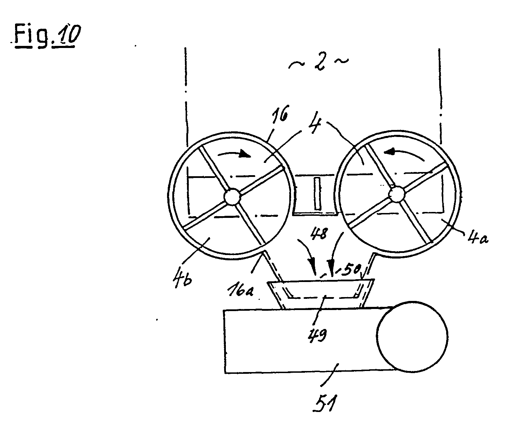

4.3 Beschickung von Förderbändern, Kompostmühlen, Topfpressen usw. (Fig. 10)

Mit zusätzlichen Abdeckhauben kann das neue Breitstreugerät 1 das vorzerkleinerte Streugut mischen und in den Wurftrichter 50 eines z.B. hinter dem Streugerät aufgestellten Gerätes 51 zur Zerkleinerung von Kompostmaterial (oder einer Erdtopfpresse, eines Förderbandes, eines Gebläses oder einer Strohmühle oder eines anderen Arbeitsgerätes zur Behandlung des Fördergutes) auswerfen. Die zusätzliche Abdeckhaube besteht aus einem abnehmbaren Gehäuse 48, das die Streuscheiben 4 umgibt und im Bereich der inneren Enden 16a der Prallwände 16 je eine schmale Austrittsöffnung 49 aufweist, die auf die Einfüllöffnung 50 des Arbeitsgerätes 51 zur Weiterverarbeitung des Streugutes gerichtet ist. Es ist also nicht mehr erforderlich, das Streugerät 1 abzubauen und durch ein Querband zu ersetzen. Man spart also nicht nur die Anschaffungskosten für ein Entlade- oder Überladeband, sondern auch die Arbeitszeit für das jeweilige Umrüsten.

Dieser Vorzug macht das Streugerät 1 auch für Gärtnereien, Baumschulenusw. besonders geeignet. Der Streuwagen 2 kann dort als Zwischenlager für verschiedenartiges Material verwendet werden, das in der Streuvorrichtung 1 gemischt und entweder einer Maschine 51 zugeführt oder ausgestreut werden kann.

### 4.4 Aufsetzen von Kompostmieten (Fig. 7)

Mit einem an einem zusätzlichen Schwenkarm 57 angebrachtem Pralltuch 58 aus Kunststoff kann durch "Seitenstreuen" gemäß Abschnitt 3 auch eine Kompostmiete 59 aufgesetzt werden. Die Drehschieber 29 der Streuscheiben 4 sind so einzustellen, daß das von ihnen ausgeworfene Gut neben der Fahrspur 33 etwa auf die Mitte des Pralltuches 58 geworfen wird und dann auf die Kompostmiete 59 fällt. Dies kann entweder im Stand nach gelegentlichem Vorfahren oder während langsamer Fahrt geschehen.

Dadurch kann z.B. eine 50, 100 oder 200 m lange Kompostmiet aus demselben oder auch unterschiedlichem Material lagenweise aufgebaut werden. Dies hat den Vorteil, daß die jeweils aufgebrachte Schicht verhältnismäßig flach und deshlab längere Zeit der Luft ausgesetzt ist. Wenn sie nach einigen Tagen durch weiteres Material bedeckt wird, ist das Material schon so weit verrottet, daß sein Sauerstoffbedarf geringer ist.

### Patentansprüche

1. Vorrichtung zum Transportieren, Dosieren, Zerkleinern, Mischen und Ausstreuen von Massengut, insbesondere Stalldünger und/oder ähnlichem, die eine Ladefläche mit einem Kratzboden (3) aufweist, an dessem hinterem Ende ein Streugerät (1) angeordnet ist, das sich unterhalb wenigstens einer unter einer Abdeckhaube (8) rotierenden Dosierwalze (7) befindet und das wenigstens zwei in einem Abstand voneinander angeordnete und auf ihrer Vorderseite von vertikalen Prallwänden (16) umgebene Streuscheiben (4) aufweist, wobei der senkrechte Rand eines um die Drehachse mindestens einer Streuscheibe (4) verschwenkbaren und festellbaren Drehschiebers (29) konzentrisch um die Streuscheibe (4) bzw. die Prallwand (16) verschwenkbar ist und in wenigstens einer seiner möglichen Stellungen das hintere Ende (16a) der Prallwand (16) überragt und dadurch die Richtung des von den Streuscheiben ausgeworfenen Gutes verändert, dadurch gekennzeichnet, dass die, die Vorderseite der Streuscheiben (4) umgebenden, zu deren Drehachse (4c) konzentrischen Prallwände (16) z-förmig prolifiert und ausschliesslich an ihrem oberen Rand (16b) mit einer zwischen den Streuscheiben befindlichen Plattform (14) und einem Querträger (18) derart verbunden sind, dass die Verschwenkung des enkrechten Randes (29a) des um die Drehachse (4c) jeder Streuscheibe (4a, 4b) verschwenkbaren und feststellbaren Drehschiebers (29) in einem vertikalen Spalt (39) zwischen der Aussenseite (16c) der Prallwand (16) und der Rückseite (18b) des Querträgers (18) erfolgt.

2. Vorrichtung nach Anspruch 1, dadurch gekennzeichnet, daß die inneren Enden (16a) der Prallwände(16) etwa im Bereich einer gedachten Verbindungslinie (40) der Drehachsen (4c) der Streuscheiben (4a 4b), die äußeren Enden (16a) dagegen in einem erheblichen Abstand (41) vor derselben angeordnet sind.

3. Vorrichtung nach Anspruch 1 oder 2, dadurch gekennzeichnet, daß an der Grundplatte (27) wenigstens eines Drehschiebers (29) mit senkrechtem Rand (29a) eine zweite Grundplatte (28) mit einem weiteren senkrechten Rand (28a) in verschiedenen Stellungen anbringbar ist, so daß der Drehschieber (29) auch gleichzeitig beide Enden (16a) der Prallwände (16) um einstellbare Strekken periodisch überragen kann.

4. Vorrichtung nach einem der vorhergehenden Ansprüche, dadurch gekennzeichnet, daß der Querträger (18) mit seitlichen Tragplatten (42) versehen ist, die in am Fahrzeugrahmen (2a) angebrachten Konsolen (22) leicht lösbar befestigt sind.

5. Vorrichtung nach einem der vorhergehenden Ansprüche, dadurch gekennzeichnet, daß wenigstens ein Getriebe (6a) mit einer seitlichen Eingangs. bzw. Abtriebswelle (45) versehen ist.

6. Vorrichtung nach einem der vorhergehenden Ansprüche, dadurch gekennzeichnet, daß die um den vertikalen Hals (6c) der Getriebe (6) schwenkbar gelagerten Drehschieber (29) über längenverstellbare Schub- bzw. Druckstangen (34) mit einem das Streugut auf der Platform abwechselund auf die linke oder rechte Streuscheibe schiebt, hin- und hergehenden Räumarm (15) verbunden und daher bei Bedarf mechanisch ständig hin- und hergehend antreibbar sind, so daß die Streurichtung laufend verändert wird.

7. Vorrichtung nach einem der vorhergehenden Ansprüche, dadurch gekennzeichnet, daß der Drehschieber (29) den hinteren Rand der Prallwände (16) wenigstens auf einer Seite nur zeitweise um einstellbare Strecken überragt und zeitweise ganz in dem vertikalen Spalt (39) verschwindet und bei seiner nachfolgenden Bewegung etwa am Rand der Prallwand (16) hängenbleibendes Streugut abstreift.

8. Vorrichtung nach einem der vorhergehenden Ansprüche, dadurch gekennzeichnet, daß wenigstens ein Getriebe (6a) eine um eine parallel zur Fahrtrichtung verlaufende- Achse rotierende Abtriebswelle (46) mit einem Kurbelzapfen (47) aufweist, an dem eine den Räumarm (15) mit der Kurbel (47) verbindende Zugstange (34) abgelenkt ist.

9. Vorrichtung nach einem der vorhergehenden Ansprüche, dadurch gekennzeichnet, daß an den hinteren Enden (16a, 29b) der Prallwand (16) und/ oder der Drehschieber (29) Stufenplatten (30) befestigt sind, die begrenzt schwenkbar, mindestens aber höhenverstellbar sind, so daß das von den Streuscheiben (4) vorzugsweise tangential ausgeworfene Streugut zum Teil über den oberen Rand (31) der Stufenplatte (30) hinwegfliegt und zum Teil durch die Stufenplatte (30) tangential abgelenkt wird.

10. Vorrichtung nach einem der vorhergehenden Ansprüche, dadurch gekennzeichnet, daß an jeder Streuscheibe (4) anbringbare Verteilersterne (35) in einer Lagerkonsole (60) gelagert und durch einen abgedeckten Keilriemen (37) antreibbar sind.

11. Vorrichtung nach Anspruch 10, dadurch gekennzeichnet, daß der Keilriemen (37) eine auf der Welle des Verteilersternes angebrachte Keilriemenscheibe (35a) und eine unterhalb der Streuscheibe (4) angeordneten Spannrolle (38) umschlingt und mit seiner Außenseite (37a) kraftschlüssig an einem an der Unterseite der Streuscheibe angebrachten Reibring (36) anliegt.

12. Vorrichtung nach einem der vorhergehenden Ansprüche, dadurch gekennzeichnet, daß über den Streuscheiben (4) ein an der schwenkbaren Klappe (11) der Rückwand (9) der Haube (8) angebrachtes Deckblech (12a) höhenverstellbar angeordnet ist.

13. Vorrichtung nach einem der vorhergehenden Ansprüche, dadurch gekennzeichnet, daß die Streuscheiben (4) von einem abnehmbaren Gehäuse (48) umgeben sind, das im Bereich der inneren Enden (16a) der Prallwände (16) je eine schmale Austrittsöffnung (49) aufweist, die auf die Einfüllöffnung (50) eines Arbeitsgerätes (51) zur Weiterverarbeitung des Streugutes gerichtet ist.

14. Vorrichtung nach einem der vorhergehenden Ansprüche, dadurch gekennzeichnet, daß die Eingangswelle (52) eines Getriebes auf die Abtriebswelle (53) eines Verteilergetriebes (54) aufsteckbar ist, das zwei seitliche Abtriebswellen (55, 56) für die Schrittschaltung (61) des Kratzbodens und den Antrieb (62) der Dosierwalzen (7) aufweist.

15. Vorrichtung nach einem der Ansprüche 1 bis 13, dadurch gekennzeichnet, daß die Eingangswelle (52) des Getriebes (6a) mit der Abtriebswelle (53) eines Winkelgetriebes (54) verbunden ist, das nur eine seitliche Abtriebswelle (55) aufweist, die die Schrittschaltung (61) des Kratzbodens antreibt.

16. Vorrichtung nach Anspruch 15, dadurch gekennzeichnet, daß die horizontalen Dosierwalzen (7) durch eine seitliche Abtriebswelle (45) eines die Streuscheiben (4) tragenden Getriebes (6a) antreibbar sind.

17. Vorrichtung nach Anspruch 16, dadurch gekennzeichnet, daß die Abtriebswelle (45) parallel zu der Verbindungswelle (63) beider Streuscheibengetriebe (6), aber in einem Abstand (64) nach vorne versetzt angeordnet ist.

18. Vorrichtung nach einem der vorhergehenden Ansprüche, dadurch gekennzeichnet, daß das Verteilergetriebe (54) in einem seitlichen Abstand von der Längsmittellinie des Fahrzeuges (2) unterhalb des Kratzbodens (3) angeordnet ist.

**Revendications**

1. Dispositif de transport, dosage, broyage, mélange et épandage de matériaux en vrac, particulièrement de fumier d'étable et/ou de produits analogues, comportant une surface de chargement à plancher racleur (3), à la partie arrière duquel est monté un dispositif d'épandage (1) placé endessous d'au moins un cylindre doseur (7) disposé sous un capot (8) et présentant au moins deux disques d'épandage (4) séparés par une certaine distance et entourés de parois de déviation verticales (16) sur leur face avant, le bord vertical d'un coulisseau rotatif (29) orientable et immobilisable autour de l'axe de rotation d'au moins un disque d'épandage (4) étant déplaçable concentriquement autour du disque d'épandage (4) ou de la paroi de déviation (16) et dépassant au moins dans une de ses positions possibles l'extrémité arrière (16a) de la paroi de déviation (16), de sorte à modifier la direction d'épandage du produit projeté par les disques d'épandage, caractérisé en ce que les parois de déviation (16) entourant l'avant des disques d'épandage (4) et placées concentriquement par rapport à l'axe de rotation (4c) de ceux-ci, présentent un profil en Z et sont exclusivement attachées par leur rebord supérieur (16b) à une plateforme (14) située entre les disques d'épandage et à une entretoise transversale (18), de telle sorte que la rotation du bord vertical (29a) du coulisseau rotatif (29) orientable et immobilisable autour de l'axe de rotation (4c) de chaque disque d'épandage (4a, 4b) se fasse dans un espace vertical laissé libre entre le flanc extérieur (16c) de la paroi de déviation (16) et le flanc arrière (18b) de l'entretoise transversale (18).

2. Dispositif conforme à la revendication 1, caractérisé en ce que les extrémités internes (16a) des parois de déviation (16) sont placées sensiblement à proximité d'une ligne de jonction imaginaire (40) des axes de rotation (4c) des disques d'épandage (4a, 4b) tandis que les extrémités externes (16a) sont au contraire placées à une importante distance (41) à l'avant de celle-ci.

3. Dispositif selon la revendication 1 ou 2, caractérisé en ce qu'au plateau (27) d'au moins un coulisseau rotatif (29) à bord vertical (29a) il est possible d'adjoindre dans différentes positions un deuxième plateau (28) comportant un autre bord vertical (28a), de telle sorte que le coulisseau rotatif (29) puisse périodiquement dépasser simultanément et sur des distances réglables les deux extrémités (16a) des parois de déviation (16).

4. Dispositif selon l'une des revendications précédentes, caractérisé en ce que l'entretoise transversale (18) comporte des plaques-supports latérales (42) qui peuvent être montées de façon aisément amovible sur des consoles (22) fixées sur le châssis du véhicule (2a).

5. Dispositif selon l'une des revendications précédentes, caractérisé en ce qu'au moins un boîtier (6a) comporte un arbre d'entrée respectivement de sortie latéral (45).

6. Dispositif selon l'une des revendications précédentes, caractérisé en ce que les coulisseaux rotatifs (29) montés pour pivoter autour du col vertical (6c) des boîtiers (6) sont reliés à un racloir (15) à mouvement alternatif, servant à pousser alternativement le produit d'épandage sur la plateforme vers le disque d'épandage gauche ou le disque droit, par l'intermédiaire de tiges de poussée ou de pression (34) à longueur réglable et peuvent donc si nécessaire être entraînés mécaniquement dans un mouvement de va-et-vient constant, de sorte à continuellement modifier la direction d'épandage.

7. Dispositif selon l'une des revendications précédentes, caractérisé en ce que le coulisseau rotatif (29) ne dépasse sur au moins un côté que de temps en temps le bord arrière des parois de déviation (16) sur des distances réglables et qu'il disparaît de temps en temps entièrement dans l'espace vertical (39) et que durant son coulissement suivant il élimine par raclage le produit d'épandage resté accroché au bord de la paroi de déviation (16).

8. Dispositif selon l'une des revendications précédentes, caractérisé en ce qu'au moins un boîtier (6a) présente un arbre de sortie (46) tournant autour d'un axe orienté parallèlement au sens de déplacement et comportant une manivelle (47) sur laquelle s'articule une tringle de traction (34) reliant le racloir (15) à la manivelle (47).

9. Dispositif selon l'une des revendications précédentes, caractérisé en ce que des plaques étagées (30) sont montées sur les extrémités arrières (16a, 29b) de la paroi de déviation (16) et/ou des coulisseaux (29), lesquelles plaques sont limitées en pivotement mais sont au moins réglables en hauteur, de telle sorte que le produit d'épandage projeté de préférence de manière tangentielle par les disques d'épandage (4) soit projeté partiellement au-dessus du bord supérieur (31) de la plaque étagée (30) et partiellement dévié selon un angle tangentiel par la plaque étagée (30).

10. Dispositif selon l'une des revendications précédentes, caractérisé en ce qu'il est possible d'adjoindre à chaque disque d'épandage (4) des rotors distributeurs (35) montés dans une console support (60) et de les entraîner par une courroie trapézoidale (37) couverte.

11. Dispositif selon la revendication 10, caractérisé en ce que la courroie trapézoidale (37) passe sur une poulie à gorge (35a) montée sur l'axe du rotor distributeur et sur un galet tendeur (38) monté sous le disque d'épandage (4) et en ce que la face externe (37a) est entraînée par adhérence par un anneau de friction (36) monté sous le disque d'épandage.

12. Dispositif selon l'une des revendications précédentes, caractérisé en ce qu'une tôle protectrice (12a) est montée de manière réglable en hauteur au-dessus des disques d'épandage (4) sur le volet pivotable (11) de la paroi arrière (9) du capot (8).

13. Dispositif selon l'une des revendications précédentes, caractérisé en ce que les disques d'épandage (4) sont entourés d'un carter amovible (48) présentant à proximité des extrémités internes (16a) des parois de déviation (16) une étroite ouverture de décharge (49) dirigée sur l'ouverture d'alimentation (50) d'un appareil de traitement (51) destiné à continuer le traitement du produit d'épandage.

14. Dispositif selon l'une des revendications précédentes, caractérisé en ce que l'arbre d'entrée (52) d'un boîtier peut être raccordé à l'arbre de sortie (53) d'un carter de distribution (54) comportant deux arbres de sortie latéraux (55, 56) pour l'entraînement intermittent (61) du plancher racleur et l'entraînement (62) des cylindres doseurs (7).

15. Dispositif selon l'une des revendications 1 à 13, caractérisé en ce que l'arbre d'entrée (52) du boîtier (6a) est relié à l'arbre de sortie (53) d'un carter de distribution (54) ne comportant qu'un arbre de sortie latéral (55) pour l'entraînement intermittent (61) du plancher racleur.

16. Dispositif selon la revendication 15, caractérisé en ce que les cylindres doseurs horizontaux (7) peuvent être entraînés par un arbre de sortie latéral (45) d'un boîtier (6a) portant les disques d'épandage (4).

17. Dispositif selon la revendication 16, caractérisé en ce que l'arbre de sortie (45) est disposé parallèlement à l'arbre de liaison (63) entre les deux boîtiers d'entraînement (6) des disques d'épandage mais est décalé vers l'avant d'une distance (64).

18. Dispositif selon l'une des revendications précédentes, caractérisé en ce que le carter de distribution (54) est monté en une position décalée latéralement par rapport à la ligne longitudinale médiane du véhicule (2) sous le plancher racleur (3).

**Claims**

1. Apparatus for transporting, metering, comminuting, mixing and spreading a mass product, in particular farmyard manure and/or the like, having a loading area with a scraper floor (3), to whose rear end a spreading apparatus (1) is mounted, which is located under at least one metering roller (7) rotating below a covering hood (8) and which has at least two spreading discs (4) mounted with clearance from one another and surrounded on their front side by vertical deflecting walls (16), wherein the vertical edge of a rotary slide valve (29) pivotable and lockable about the rotary shaft of at least one spreading disc (4) is pivotable concentrically about the spreading disc (4) or the deflecting wall (16) and projects in at least one of its possible positions over the rear end (16a) of the deflecting wall (16) and thereby changes the direction of the product ejected by the spreading discs, characterised in that the deflecting walls (16) surrounding the front side of the spreading discs (4) and concentric to their rotary shaft (4c) are profiled in a z-shape and are connected solely by their upper edge (16b) to a platform (14) located between the spreading discs and to a cross-bar (18) in such a manner that the pivoting of the vertical edge (29a) of the rotary slide valve (29) pivotable and lockable about the rotary shaft (4c) of each spreading disc (4a, 4b) is effected in a vertical gap (39) between the exterior (16c) of the deflecting wall (16) and the rear side (18b) of the cross-bar (18).

2. Apparatus according to claim 1, characterised in that the inner ends (16a) of the deflecting walls (16) are mounted approximately in the region of a hypothetical line (40) joining the rotary shafts (4c) of the spreading discs (4a, 4b), but the outer ends (16a) on the other hand are mounted at a considerable distance (41) in front of said line.

3. Apparatus according to claim 1 or 2, characterised in that a second base plate (28) with a further vertical edge (28a) may be moved to various positions on the base plate (27) of at least one rotary slide valve (29) with a vertical edge (29a), so that the rotary slide valve (29) can periodically project by an adjustable amount over both ends (16a) of the deflecting walls (16) simultaneously.

4. Apparatus according to one of the preceding claims, characterised in that the cross-bar (18) is provided with lateral support plates (42), which are fixed in an easily detachable manner in brackets (22) mounted on the vehicle frame (2a).

5. Apparatus according to one of the preceding claims, characterised in that at least one gear system (6a) is provided with a lateral input respectively output shaft (45).

6. Apparatus according to one of the preceding claims, characterised in that the rotary slide valves (29) mounted pivotably about the vertical neck (6c) of the gear system (6) are connected via longitudinally movable push or pressure rods (34) to a reciprocating clearing arm (15), which pushes the product to be spread on the platform alternately to the left-hand or to the right-hand spreading disc, and the rotary slide valves are therefore constantly mechanically drivable in a reciprocating manner when required, so that the spreading direction is constantly changed.

7. Apparatus according to one of the preceding claims, characterised in that the rotary slide valve (29) projects only periodically by an adjustable amount over the rear edge of the deflecting walls (16) at least on one side, and periodically disappears completely into the vertical gap (39), and in its subsequent movement scrapes off any product to be spread left hanging on the edge of the deflecting wall (16).

8. Apparatus according to one of the preceding claims, characterised in that at least one gear system (6a) has a driving shaft (46) rotating about an axis extending parallel to the direction of travel, said shaft having a crank pin (47) to which a drawbar (34) joining the clearing arm (15) to the crank (47) is coupled.

9. Apparatus according to one of the preceding claims, characterised in that step plates (30) are fixed to the rear ends (16a, 29b) of the deflecting wall (16) and/or of the rotary slide valves (29), and are to a limited extent pivotable, but are at least height-adjustable, so that the product to be spread ejected preferably tangentially from the spreading discs (4) partly flies over the upper edge (31) of the step plate (30) and is partly diverted tangentially by the step plate (30).

10. Apparatus according to one of the preceding claims, characterised in that distributing star wheels (35) mountable on each spreading disc (4) are mounted in a bearing bracket (60) and are drivable by a covered V-belt (37).

11. Apparatus according to claim 10, characterised in that the V-belt (37) is wound round a V-belt disc (35a) mounted on the shaft of the distributing star wheel and round a tension pulley (38) mounted under the spreading disc (4) and the exterior (37a) of the V-belt (37) exerts pressure upon the friction ring (36) mounted on the underside of the spreading disc to transmit movement.

12. Apparatus according to one of the preceding claims, characterized in that a cover plate (12a) mounted on the pivotable flap (11) of the rearwall (9) of the hood (8) is mounted above the spreading discs (4) in a height-adjustable manner.

13. Apparatus according to one of the preceding claims, characterized in that the spreading discs (4) are surrounded by a detachable housing (48), which has a narrow discharge aperture (49) in the region of the respective inner ends (16a) of the deflecting walls (16), this discharge aperture (49) being directed at the filling aperture (50) of processing apparatus (51) for further treatment of the product to be spread.

14. Apparatus according to one of the preceding claims, characterized in that the input shaft (52) of one gear system is mountable on the output shaft (53) of a distributing gear system (54), which has two lateral output shafts (55, 56) for the stepping circuit (61) of the scraper floor and for the drive (62) of the metering rollers (7).

15. Apparatus according to one of claims 1 to 13, characterized in that the input shaft (52) of the gear system (6a) is connected to the output shaft (53) of an angular gear system (54), which has only one lateral output shaft (55), which drives the stepping circuit (61) of the scraper floor.

16. Apparatus according to claim 15, characterized in that the horizontal metering rollers (7) are drivably by a lateral output shaft (45) of a gear system (6a) supporting the spreading discs (4).

17. Apparatus according to claim 16, characterized in that the output shaft (45) is mounted parallel to the shaft (63) which connects the two spreading disc gear systems (6), but is offset towards the front at a distance (64).

18. Apparatus according to one of the preceding claims, characterized in that the distributing gear system (54) is mounted under the scraper floor (3) with lateral clearance from the longitudinal centre of the vehicle (2).

Fig. 1

Fig. 2

Fig. 2a

Fig. 3

Fig. 4

Fig. 5

EP 0 104 622 B1

Fig. 6

33

35

35

Fig: 7

~2~

16          16

57

4b

35          35

58                    29

59                    4a

4

Fig.8

36    35
35a
27    37    60
6

36
37    6

Fig.9

36    37a
38    37
38

35    36    38
35a

Fig.10

Fig. 11

EP 0 104 622 B1

Fig. 12

F